**Europäisches Patentamt**

(19) **European Patent Office**

**Office européen des brevets**

(11) Numéro de publication: **0 021 949**
**B1**

(12) # FASCICULE DE BREVET EUROPEEN

(45) Date de publication du fascicule du brevet:
07.09.83

(51) Int. Cl.³: **A 23 J 3/02**

(21) Numéro de dépôt: **80400842.3**

(22) Date de dépôt: **10.06.80**

(54) **Procédé de préparation de caséinates et nouveaux produits ainsi obtenus.**

(30) Priorité: **14.06.79 FR 7915297**

(43) Date de publication de la demande:
**07.01.81 Bulletin 81/1**

(45) Mention de la délivrance du brevet:
**07.09.83 Bulletin 83/36**

(84) Etats contractants désignés:
**BE DE GB IT LU NL**

(56) Documents cités:
**GB-A-2 004 174**
**US-A-2 005 730**
**CHEMICAL ABSTRACTS, vol. 75, no. 19, 8 novembre 1977, page 144, colonne 2, abrégé 117 362j Columbus, Ohio, US**
**CHEMICAL ABSTRACTS, vol. 75, no. 21, 22 novembre 1971, page 199, colonne 2, abrégé 128684S Columbus, Ohio, US**

(73) Titulaire: **FROMAGERIES BEL, 4, rue d'Anjou, F-75008 Paris (FR)**

(72) Inventeur: **Grandadam, Yves, 15 Square de Sologne, F-41100 Vendôme (FR)**
Inventeur: **Tavaux, Christian, 50 Rue Beaunier, F-75014 Paris (FR)**

(74) Mandataire: **Fruchard, Guy et al, NOVAPAT-CABINET CHEREAU 107, boulevard Péreire, F-75017 Paris (FR)**

## Procédé de préparation de caséinates et nouveaux produits ainsi obtenus

La présente invention se rapporte en général à un procédé de préparation de produits provenant du lait, utilisables dans de nombreuses industries, telles que les industries alimentaires, pharmaceutiques et chimiques, et elle concerne, plus particulièrement, un procédé de préparation de caséinates et les nouveaux produits ainsi obtenus.

La technique classique de fabrication de caséinates consiste à préparer une caillebotte par coagulation du lait en utilisant une fermentation lactique spontanée ou accélérée en ajoutant des levains lactiques, dans ce dernier cas, on emploie 1 à 2% de levains (ensemencement massif) et une température d'environ 32 à 40°C, ce qui permet d'obtenir une coagulation au bout d'environ 5 à 8 heures. La coagulation peut être aussi réalisée en ajoutant un acide minéral ou organique (par exemple l'acide chlorhydrique, l'acide sulfurique, l'acide lactique). On procède alors à un lavage de la caséine, puis éventuellement à son séchage. La caséine est ensuite transformée en caséinate en ajoutant, à la caillebotte telle qu'elle est ou à de la caséine en poudre reconstituée, un agent de solubilisation. On emploie, par exemple, une base comme la soude, la chaux, la potasse, l'ammoniaque ou un sel comme le carbonate de sodium ou les sels de l'acide phosphorique, seuls ou en mélange.

Pour obtenir la solubilisation, il faut une période assez longue de maturation. Si cette maturation est réalisée en maintenant le produit à chaud (par exemple à 80°C) avec agitation, la solubilisation est obtenue au bout d'environ 3 à 4 heures. Le caséinate obtenu est alors séché, par exemple par le dispositif à séchage par atomisation dit Spray ou celui à séchage sur cylindre dit Hatmaker.

Cette technique présente un certain nombre d'inconvénients concernant le procédé de fabrication et la qualité des produits. En premier lieu, elle exige un important matériel (cuves de solubilisation et de maturation). Ensuite, elle est longue et coûteuse, et on est obligé de limiter la teneur en extrait sec du fait de la viscosité engendrée. Ainsi, l'extrait sec doit être compris entre environ 17 et 25% dans le procédé Spray et entre environ 25 et 30% dans le procédé Hatmaker. Enfin, les produits présentent une faible densité et une mauvaise mouillabilité, rendant leur utilisation délicate ou difficile.

Il est en outre connu dans l'art antérieur de préparer des caséinates à partir d'une caséine acide par traitement d'un mélange dans une extrudeuse. Ainsi, le brevet américain 2 005 730 décrit un procédé de préparation de caséinates dans lequel on traite un mélange de caséine, d'un agent de solubilisation et d'une quantité d'eau comprise entre 25 et 30% dans une extrudeuse. Toutefois, le produit obtenu par ce procédé se trouve à l'état pâteux et il doit ensuite être séché pour obtenir un produit utilisable. Il a été observé que le séchage d'un tel produit, quelles que soient les conditions dans lesquelles il a été effectué, change la structure du caséinate obtenu et provoque généralement une dénaturation de son goût. De plus, les caséinates obtenus sont généralement de faible densité et présentent une mauvaise mouillabilité.

Il serait donc utile de prévoir un procédé de préparation de caséinates, permettant d'obtenir des produits à qualités identiques ou améliorées par rapport à celles des caséinates obtenus par le procédé classique, sans présenter les inconvénients mentionnés ci-dessus, tant du point de vue diffcultés de réalisation du procédé que du point de vue défauts des produits obtenus.

Un objet de la présente invention est de prévoir un procédé de préparation de caséinates ne présentant pas les inconvénients du procédé classique.

Un autre objet de la présente invention est de fournir des caséinates présentant les mêmes caractéristiques analytiques, fonctionnelles et technologiques que ceux obtenus par le procédé classique, sans présenter les problèmes liés à l'irrégularité de qualité, à la fabile densité et à la mauvaise mouillabilité.

Un autre objet de la présente invention est d'obtenir des caséinates de même qualité ou de qualité améliorée par rapport aux produits obtenus par le procédé classique, mais dans des conditions de traitement plus économiques, plus simples et plus rapides.

D'autres objets apparaîtront d'aprés la description suivante. Ces objets sont maintenant atteints par un procédé de préparation de caséinates consistant à introduire dans un dispositif de cuisson-extrusion un mélange formé d'une matière première, choisie dans le groupe se composant de caséine acide, de caséine acide à l'état de caillebotte fraîche, de caséine acide à l'état de caillebotte en poudre et de coprécipités, d'un agent de solubilisation et d'eau caractérisé en ce que la teneur en extrait sec du mélange à extruder est telle que le séchage du produit obtenu peut être éliminé, celle de la caséine de départ étant comprise entre 85 et 92% et en ce qu'on applique pendant un temps de 10 secondes à 1 minute une pression comprise entre 14.7 et 147.1b (15 et 150 kg/cm2), à une température de 30 à 90°C.

Ainsi, dans ce procédé, le dispositif de cuisson-extrusion sert de réacteur chimique dans lequel l'influence simultanée de la pression et de la température choisies dans des gammes déterminées permet de transformer la matière de départ (caséine acide, par exemple) à l'aide d'un agent de solubilisation en caséinate. Les conditions d'utilisation du dispositif permettent d'obtenir la solubilisation de la caséine, sans conduire à sa dénaturation par coagulation.

Le dispositif de cuisson-extrusion est, de préférence, un cuiseur-extrudeur bi-vis, du type de celui de la sociéte dite Creusot-Loire, mais on peut employer n'importe quel autre type de cuiseur-extrudeur,

2

par exemple les cuiseurs-extrudeurs mono-vis dont les presses à pâtes alimentaires font partie.

La matière première est choisie dans le groupe comprenant la caséine acide classique, de préférence à l'état de poudre avec un extrait sec pouvant atteindre 90 – 92%, de la caillebotte fraîche, avec un extrait sec compris entre environ 40 et 70%, et des coprécipités à faible teneur en calcium, avec un extrait sec compris entre environ 40 et 90%, dont le procédé de fabrication est décrit dans l'article de Southward et Aird paru dans le New Zealand J. Dairy Science and Technology (1978), 13, p. 76 – 96.

L'agent de solubilisation est généralement une base comme la soude, la potasse, la chaux et l'ammoniaque ou un sel comme le carbonate de sodium ou les sels de l'acide phosphorique.

Cet agent de solubilisation est employé en quantité telle que la teneur en cations du produit obtenu soit comprise entre 1 et 3,5%. Si la teneur est voisine de 3,5%, ceci permet d'obtenir des caséinates à pH élevé (environ 10 – 11), ayant des propriétés particulières.

L'eau est ajoutée dans le mélange en quantité variant selon la matière première utilisée et les caractéristiques d'humidité résiduelle (extrait sec) que l'on désire fournir au produit final.

Dans le mélange de la matière première, de l'agent de solubilisation et de l'eau, on peut ajouter des composés permettant de modifier la composition du produit final à obtenir, par exemple des glucides et des protéines animales et végétales, ou permettant de protéger ou d'exacerber les propriétés de ce produit final à obtenir, par exemple des sucres réducteurs ou non et des polyphosphates. On peut aussi incorporer dans le mélange initial tout additif qui permet de fournir des caséinates à viscosité élevée, comme ceux indiqués dans FR-A-2 370 441.

La quantité de ces composés ne doit pas dépasser environ 50% du mélange initial (matière première + agent de solubilisation + eau).

Le caséinate sortant du dispositif de cuisson-extrusion est ensuite éventuellement soumis à un post-séchage, à une granulation et à un broyage.

Le procédé de la présente invention fournit des avantages importants par rapport au procédé classique de fabrication des caséinates.

1. On peut utiliser de la caséine ayant un extrait sec élevé pouvant aller jusqu'à 90 – 92%, et étant compris de préférence, entre 85 et 90%.
2. Par suite de cette teneur élevée en extrait sec dans la caséine, le séchage peut être éliminé ou simplement réduit à un post-séchage.
3. Les temps de solubilisation sont extrêmement courts, de l'ordre de 10 secondes à 1 minute.
4. Le procédé peut être réalisé en continu.
5. Les produits obtenus possèdent les mêmes caractéristiques technologiques que les produits obtenus par le procédé classique, notamment des propriétés d'emulsification, de rétention d'eau et de matières grasses, de foisonnement, etc. . . De plus, l'utilisation du caséinate est améliorée.
6. Le produit obtenu possède toutes les qualités des produits résultant du procédé classique, avec un coût inférieur.

Ainsi, le procédé de la présente invention permet d'obtenir des produits présentant les mêmes caractéristiques analytiques, fonctionnelles et technologiques que celles des produits obtenus par la méthode conventionnelle, mais avec une amélioration de la mouillabilité et de la densité de la poudre, ce qui facilite leur emploi dans certaines applications.

Les caséinates obtenus ont les applications courantes des caséinates obtenus par le procédé classique, par exemple des applications alimentaires en charcuterie, desserts glacés, laits d'imitation, industrie des sauces et potages, boissons lactées, aliments diététiques, de régime et pour enfants, etc., ainsi que des applications dans les industries pharmaceutiques et chimiques, telles que les colles, les adhésifs, les peintures, les insecticides, les encres, les cosmétiques, les linoléiums, etc.

La présente invention sera maintenant décrite à l'aide de l'exemple suivant.

Exemple

On part d'une caséine en poudre à 92% ES (extrait sec) à laquelle on ajoute du carbonate de sodium au taux de 3,05% par rapport à la matière sèche et de l'eau de façon à obtenir un mélange possédant un extrait sec de 90%. On introduit le mélange dans le cuiseur-extrudeur bi-vis dont les caractéristiques sont les suivantes:

— longueur du fourreau: 600 mm,
— filière conique: 1 trou,
— vitesse de rotation des vis: 280 tours/mn,
— température d'entrée (produit): 25 à 30° C,
— température de sortie (produit): environ 98° C,
— pression à l'intérieur du fourreau: 19.6 – 39.2 b (20 – 40 kg/cm$^2$),
— temps de passage dans le fourreau, y compris le temps de traitement: 10 secondes.

**0 021 949**

A la sortie du cuiseur-extrudeur, le produit est tiré, refroidi jusqu'à la température ambiante, granulé et broyé par exemple dans un broyeur à marteau.

    — pression: 80 – 120 kg/cm², \
    — temps de passage dans le fourreau (y compris le temps de traitement): 1 mn.

A la sortie de l'appareil, le produit est refroidi avec de l'air froid sous pression, puis séché par de l'air, par exemple dans un séchoir pneumatique ou sous tunnel infra-rouge, puis granulé et broyé dans un broyeur à marteau par exemple.

La présente invention n'est pas limitée à l'exemple de rèalisation qui vient d'être décrit.

## Revendications

1. Procédé de préparation de caséinates, consistant à introduire dans un dispositif de cuisson-extrusion un mélange formé d'une matière première, choisie dans le groupe se composant de caséine acide, de caséine acide à l'état de caillebotte fraîche, de caséine acide à l'état de caillebotte en poudre et de coprécipités, d'un agent de solubilisation et d'eau, caractérisé en ce que la teneur en extrait sec du mélange extrudé est telle, que le séchage du produit obtenu peut être éliminé, celle de la caséine de départ étant comprise entre 85 et 92 % et en ce qu'on applique pendant un temps de 10 secondes à 1 minute, une pression comprise entre 14.7 et 147.1 bar (15 et 150 kg/cm²), à une température de 30 à 90° C.

2. Procédé selon la revendication 1, caractérisé en ce que l'agent de solubilisation est choisi dans le groupe se composant d'au moins un des sels constitués par le carbonate de sodium et les sels de l'acide phosphorique.

3. Procédé selon la revendication 1 ou la revendication 2, caractérisé en ce que la quantité d'agent de solubilisation est prévue pour donner une teneur en cations comprise entre 1 et 3,5% dans le produit obtenu.

4. Procédé selon l'une quelconque des revendications précédentes, caractérisé en ce que l'on ajoute au mélange initial des composés choisis dans le groupe se composant de glucides et de protéines animales ou végétales.

5. Procédé selon la revendication 4, caractérisé en ce que le taux d'incorporation des composés n'est pas supérieur à environ 50% du mélange de caséine, d'agent de solubilisation et d'eau.

## Patentansprüche

1. Verfahren zum Bereiten von Caseinaten, bestehend aus dem Eingeben in einen Koch-Extrudierapparat einer Mischung, die aus einem Stoff besteht, der aus einer Gruppe ausgewählt ist, die sich aus Caseinsäure, Caseinsäure im Zustand frischen Quarks, Caseinsäure im Zustand von pulverförmigem Quark und von Copräcipitaten, einem Löslichkeitsstoff und Wasser zusammensetzt, dadurch gekennzeichnet, daß die extrudierte Mischung einen solchen Trockengehalt aufweist, daß das Trocknen des fertigen Produktes weggelassen werden kann, daß das Casein einen Trockengehalt zwischen 85 und 92 % aufweist und daß während eines Zeitraums von 10 sec bis 1 min ein Druck zwischen 14,7 und 147,1 bar (15 und 150 kg/cm²) bei einer Temperatur von 30 bis 90°C angelegt wird.

2. Verfahren nach Anspruch 1, dadurch gekennzeichnet, daß der Löslichkeitsstoff aus einer Gruppe ausgewählt ist, die sich wenigstens aus einem der Salze zusammensetzt, die aus Natriumcarbonat und den Salzen der Phosphorsäure bestehen.

3. Verfahren nach Anspruch 1 oder 2, dadurch gekennzeichnet, daß die Menge an Löslichkeitsstoff derart bestimmt wird, daß das fertige Produkt einen Gehalt an Kationen zwischen 1 und 3,5% aufweist.

4. Verfahren nach einem der vorhergehenden Ansprüche, dadurch gekennzeichnet, daß der ursprünglichen Mischung Stoffe zugefügt werden, die aus einer Gruppe ausgewählt sind, die sich aus Kohlehydraten und tierischen oder pflanzlichen Proteinen zusammensetzt.

5. Verfahren nach Anspruch 4, dadurch gekennzeichnet, daß die Zugabemenge dieser Stoffe nicht größer ist als ungefähr 50% der Mischung aus Casein, Löslichkeitsstoff und Wasser.

## Claims

1. A method for preparing caseinates, consisting of introducing into a baking-extruding device a mixture composed of a raw material selected from the group consisting of acidic casein, acidic casein in the state of fresh curds, acidic casein as a powder and coprecipitates, a solubilizing agent and water, characterized in that the extruded mixture has such a dry extract content that the drying of the obtained product can be eliminated, in that said casein has a dry extract content comprised between

4

**0 021 949**

85 and 92 % and in that for a time of 10 seconds to 1 minute, a pressure comprised between 17.7 and 147.1 bars is applied, at a temperature of 30 to 90 °C.

2. A method according to claim 1 characterized in that the solubilizing agent is selected from the group consisting of at least one of the salts consisting of sodium carbonate and phosphoric acid salts.

3. A method according to claim 1 or claim 2 characterized in that the amount of solubilizing agent is provided so as to give a cation content comprised between 1 and 3.5% in the so obtained product.

4. A method according to anyone of the preceeding claims characterized in that to the initial mixture are added compounds selected from the group consisting of glucids and animal or vegetable preteins.

5. A method according to claim 4 characterized in that the incorporation rate of compounds is not higher than about 50% of the mixture of casein, solubilizing agent and water.